(19) **Europäisches Patentamt**

**European Patent Office**

**Office européen des brevets**

(11) **EP 0 516 128 B2**

(12) **NEW EUROPEAN PATENT SPECIFICATION**

(45) Date of publication and mention
of the opposition decision:
**18.11.1998 Bulletin 1998/47**

(45) Mention of the grant of the patent:
**09.08.1995 Bulletin 1995/32**

(21) Application number: **92109062.7**

(22) Date of filing: **29.05.1992**

(51) Int. Cl.⁶: **B62D 55/26**

(54) **Shoe of crawler belt or chain**

Bodenplatte eines Raupenbandes oder einer Raupenkette

Patin d'une bande ou chaîne à cheville

(84) Designated Contracting States:
**DE ES FR GB IT NL**

(30) Priority: **29.05.1991 JP 39397/91**
**29.05.1991 JP 39400/91**
**29.05.1991 JP 39398/91**

(43) Date of publication of application:
**02.12.1992 Bulletin 1992/49**

(73) Proprietor:
**THE YOKOHAMA RUBBER CO., LTD.**
**Tokyo, 105 (JP)**

(72) Inventor: **Hara, Yoshiaki**
**Hadano-shi, Kanagawa (JP)**

(74) Representative:
**Füchsle, Klaus, Dipl.-Ing. et al**
**Hoffmann Eitle,**
**Patent- und Rechtsanwälte,**
**Postfach 81 04 20**
**81904 München (DE)**

(56) References cited:
**GB-A- 1 335 172**          **US-A- 4 505 984**

## Description

### BACKGROUND OF THE INVENTION

#### 1. Field of the Invention

This invention relates to a shoe of a crawler belt or chain, hereinafter referred to as "crawler shoe" used in an endless tracked vehicle, such as a construction or agricultural machine or the like.

#### 2. Description of the Related Art

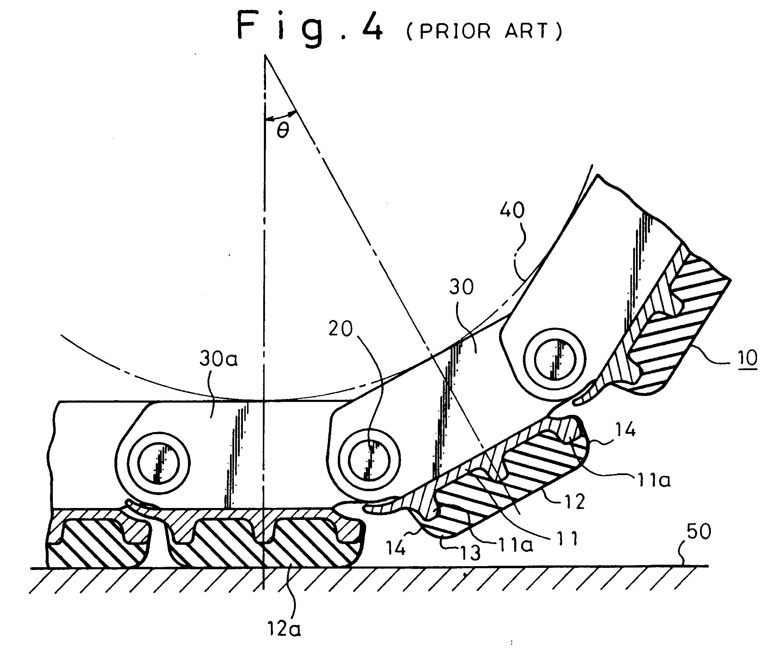

As shown in Fig. 4, in the prior art, such an endless tracked vehicle has crawler belts or chains, each of which comprising a plurality of crawler shoes 10. Each of the crawler shoes 10 comprises a metal shoes 11 made of, such as iron or the like, and a elastic shoe 12 made of, such as a rubber or the like, integrally sulfration molded and sealed with the metal shoe 11 at the ground contact side, so as to prevent the paved road from being damaged by such a crawler shoe 10. The elastic shoe 12 and the metal shoe 11 of the crawler shoe 10 are provided with blot inserting screw holes (not shown) penetrating therethrough for mounting one on the other. The crawler shoes 10 are connected to each other, in turn, by means of links 30 attached thereto by pins 20 with bolts and nuts to constitute an endless crawler belt or chain.

In such a conventionally known crawler shoe 10, the elastic shoe 12 is provided with convex portions on the surface of the respective ends in the traveling direction (i.e., the corner of intersection between the side surfaces 14 along the longitudinal direction and the ground contact surface 15).

Therefore, when the crawler shoe 10 extended on the driving or idler sprocket 40 comes into contact with the road surface 50 at the "final link plunge angle θ " and one of the respective end portions 13 of the elastic shoe 12 in the traveling direction comes to be plunged between the road surface 50 and the projection 11a of the metal shoe 11, the rubber around this portion 13 will be subjected to an expansion strain or deformation due to the shearing force.

The "final link plunge angle θ " is defined as an angle of of the link when the preceeding link 30a comes to a position to be parallel to the road surface 50 and represented as follows. $\theta = 360° / n$ Here, n = number of links.

Therefore, during traveling on a gravel road, if pebbles or the like on the road are snapped by the side faces 14 of the elastic shoes 12, the rubber therearound will be damaged and sometimes a part of the rubber will be removed.

### SUMMARY OF THE INVENTION

An object of the present invention is to provide a crawler shoe in which the elastic shoe, particularly at the respective end portions of the crawler shoe, will not be affected by a shearing force when the crawler shoe comes to a "plunged position" with respect to the road surface.

Another object of the present invention is to provide a crawler shoe in which the elastic shoe will not be damaged by a shearing force when the crawler shoe comes to a "plunged position" with respect to the road surface.

Still another object of the present invention is to provide a crawler shoe in which the drawbacks as mentioned above with reference to the prior art can be overcome.

According to the present invention these objects have been solved by the features of claim 1 and 4 respectively.

In the crawler shoe according to the present invention, at the final link plunge angle θ , the portion of the elastic shoe which comes into contact with the road surface is subjected to a compression strain or deformation more than a shearing strain or deformation. Therefore, during traveling on a gravel road, even if pebbles or the link on the road snapped by these portions, the rubber therearound will not be damaged. An endurable elastic shoe can thus be obtained.

### BRIEF DESCRIPTION OF THE DRAWINGS

Figure 1 is a cross-sectional view of a first embodiment of this invention, showing a part of a crawler belt having a plurality of crawler shoes, one being contact with the road surface and another being at a plunged position;

Figure 2 is a cross-sectional view of an embodiment, showing a part thereof similar to Fig. 1, not part of the invention;

Figure 3 is a cross-sectional view of a third embodiment of this invention, showing a part thereof similar to Fig. 1; and,

Figure 4 is a cross-sectional view of a conventionally known crawler belt, illustrating one being contact with the road surface and another being at a plunged position.

### DESCRIPTION OF THE PREFERRED EMBODIMENTS

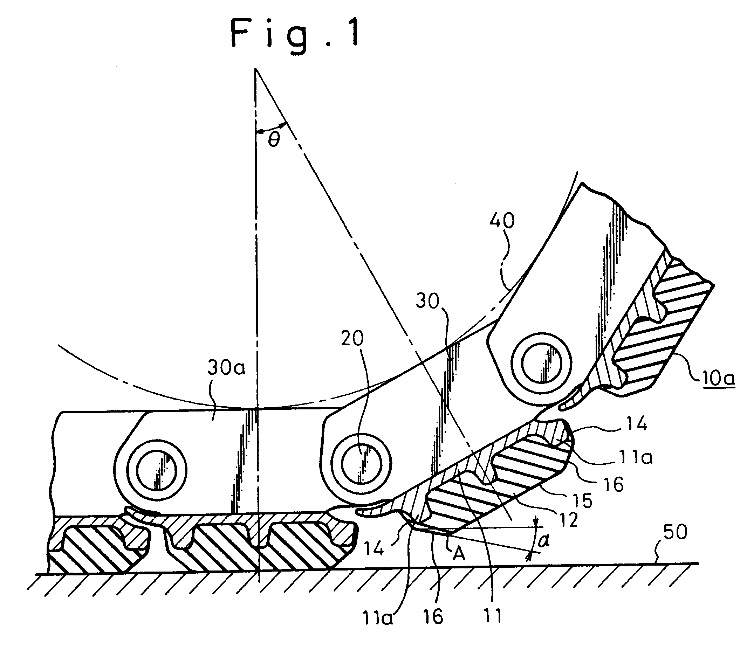

The present invention will now be described in detail with reference to the embodiment of the crawler shoe shown in Figs. 1, 2 and 3.

In Fig. 1, the parts or elements of the crawler shoe corresponding to those shown in Fig. 4 are indicated by the same reference numerals.

The surface of the elastic shoe 12 of this crawler shoe 10 is provided with tapered surfaces 16 at positions of intersections between the vertical side faces 14 arranged at the respective ends in the traveling direction and the ground contact surface 15 which is horizontal with respect to the traveling direction, i.e., on the surfaces (the upper portions of the projections 11a) corresponding to the projected areas of the projection 11a in the vertical direction toward the ground contact surface, assuming that the projection 11a of the metal shoe 11 have projected areas or surfaces in the vertical direction.

The slope or inclination of the tapered surace 16 should be suitably determined with reference to a rubber thickness of the elastic shoe 12 in such a manner that, at a position of the final link plunged angle θ , an angle α defined between the tapered surface 16 and the road surface 50 (i.e. the horizontal surface) is 0-30 degree, preferrably 5-15 degree.

Assuming that, if the slope of the tapered surface 16 is inclined downward with respect to the road surface 50, the inclination angle α is plus, and if it is inclined upward with respect to the road surface 50, the inclination angle α is minus.

If the inclination angle α is minus and if pebbles or the link on the road exsist in the gap remaining between the tapered surface 16 and the road surface 50, the tapered surface 16 will be subjected on the weight of this tracked vehicle and, therefore, in some cases the elastic shoe will be damaged. On the other hand, if the inclination angle α is more than 30 degrees, when the respective end portion of the elastic shoe 12 in the traveling direction comes into contact with the road surface 50, an expansion strain exerted on the elastic shoe 12 will be increased due to a shearing force.

Also, although in the above-mentioned first embodiment, the ground contact surface 15 of the elastic shoe 12 has a flat surface as shown in the Fig. 1, it may be formed as a convex surface. In addition, the elastic shoe 12 may be provided with transverse grooves at the vertical projected area of the central growther 11b.

Since the other portions of the crawler shoe shown in Fig. 1 are the same as those shown in Fig. 4, the detailed explanations thereof will be omitted.

According to the embodiment shown in Fig. 1, as the crawler shoe 10 constituted as mentioned above, at the time of the final link plunge angle θ, the elastic shoe 12 first comes into contact with the ground surface by the end portion A of the ground contact surface 15 of (i.e., the transitional point with the tapered surface 16). That is to say, the respective end portions of the elastic shoe 12 in the traveling direction, i.e., the vertical projected area of the corresponding projection 11a on which the tapered surface 16 is formed, does not contact the ground surface. Therefore, these portions are subjected to a compression stress more than a shearing stress and, thus, an expansion strain due to the shearing force will be considerably reduced.

Therefore, during traveling on a gravel road, even if pebbles or the link on the road snapped by the side face 14 of the elastic shoes 12, the rubber therearound will not be damaged.

If the slope or inclination angle α of of the tapered surface 16 is 0-30 degree, an expansion strain exerted on the elastic shoe 12 can be reduced to a minimum value. Also although in the above-mentioned first embodiment, the ground contact surface 15 of the elastic shoe 12 has a flat surface as shown in the Fig. 1, it may be formed as a convex surface. In this case, the stress concentration on the central portion of the elastic shoe 12 will be much reduced and, therefore, a damage around the rubber will be eliminated.

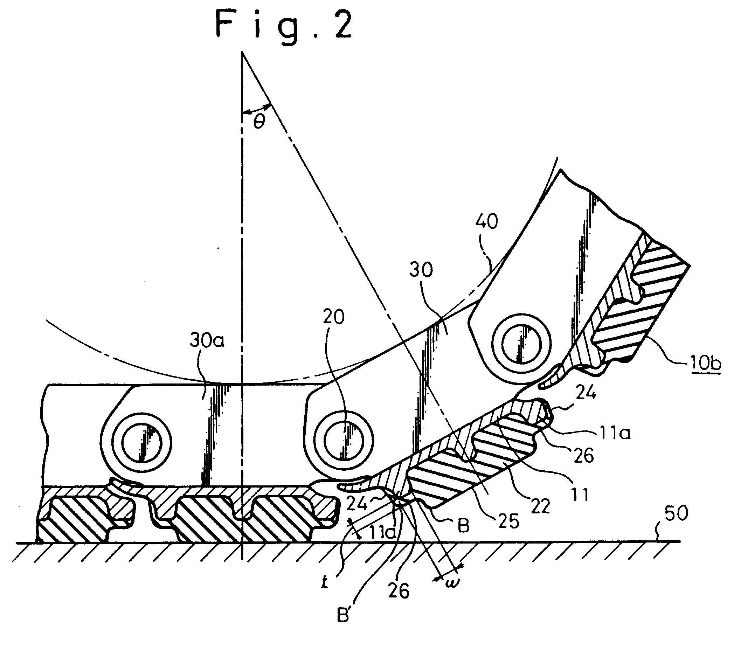

Fig. 2 shows an embodiment, the parts or elements of the crawler shoe corresponding to those shown in Figs. 1 and 4 are indicated by the same reference numerals.

The surface of the elastic shoe 22 of this crawler shoe 10 is provided with stepped portions at positions of intersections between the vertical side faces 24 arranged at the respective ends in the traveling direction and the ground contact surface 25 which is horizontal with respect to the traveling direction. In other words, on the surfaces (the upper portions of the projections 11a) of the elastic shoe 22 corresponding to the projected areas of the projection 11a in the vertical direction toward the ground contact surface 25, assuming that the projections 11a of the metal shoe 11 have projected areas or surfaces in the vertical direction, the stepped flat surfaces 26, having a height lower than that of the ground contact surface 25 at the central portion thereof in the traveling direction, are formed.

It is advantageous that the rubber thickness t of the stepped portion 26 of the elastic shoe 22 at the vertical projected areas of the projection 11a is equal to or less than a width w of the projections 11a at the upper portion thereof, preferably $t \le w$.

If the rubber thickness t is more than the width w of the upper projection portion, the shearing rigidity around the stepped portion 26 will be increased and, therefore, during traveling on a gravel road, pebbles or the link on the road will easily be snapped by the side face 24 of the elastic shoes 22 and the rubber therearound will easily be damaged.

It is preferable that the elastic shoe 22 has such a cross-section that an end of the ground contact surface 25, i.e., an intersection B defined by the stepped surface 26 of the elastic shoe 22 formed at the vertical projected areas of the projection 11a and the ground contact surface 25 at the central portion thereof in the traveling direction is nearer to the ground surface 50 than an end portion of the stepped surface 26, at the time of the final link plunge angle θ.

Also, although in the above-mentioned second embodiment, the ground contact surface 25 of the elastic shoe 22 has a flat surface, it may be formed as a convex surface. In addition, the elastic shoe 22 may be provided with transverse grooves at the vertical projected area of the central projection 11b, in the same manner as the first embodiment.

Since the other portions of the crawler shoe shown in Fig. 2 are the same as those shown in Figs. 1 and 4, the detailed explanations thereof will be omitted.

According to the embodiment shown in Fig. 2, as the crawler shoe 10 constituted as mentioned above, at the time of the final link plunge angle θ. the stepped portion 26 of the elastic shoe 22 provided at the vertical projected area of the corresponding growther 11a the respective end portions of the metal shoe 11 in the traveling direction does not contact the ground surface, but the ground contact surface 25, which is higher than the stepped portion 26, comes into contact with the ground surface. The ground contact surface 25 is, however, formed to be extend in the central area of the elastic shoe 22 and away from the vertical projected area of the corresponding projection 11a and, therefore, these portions are subjected to a compression stress more than a shearing stress.

Therefore, only a very small or almost no expansion strain is exerted on the plunged end portion of the elastic shoe 12 including the stepped portion 26 between the side surface 24, the and the ground contact surface 25. Therefore, during traveling on a gravel road, even if pebbles or the like on the road snapped by the end portion of the elastic shoe 22, the rubber therearound will not be damaged.

Particularly, if the rubber thickness t of the stepped portion 26 of the elastic shoe 22 at the vertical projected areas of the projection 11a is equal to or less than a width w of the projections 11a at the upper portion thereof, an expansion strain exerted on the elastic shoe 22 can be reduced to a minimum value.

Also, if the ground contact surface 25 of the elastic shoe 22 has a convex surface, the stress concentration on the central portion of the elastic shoe 22 will be much reduced and, therefore, a damage on the rubber around the ground contact surface 25 will be eliminated.

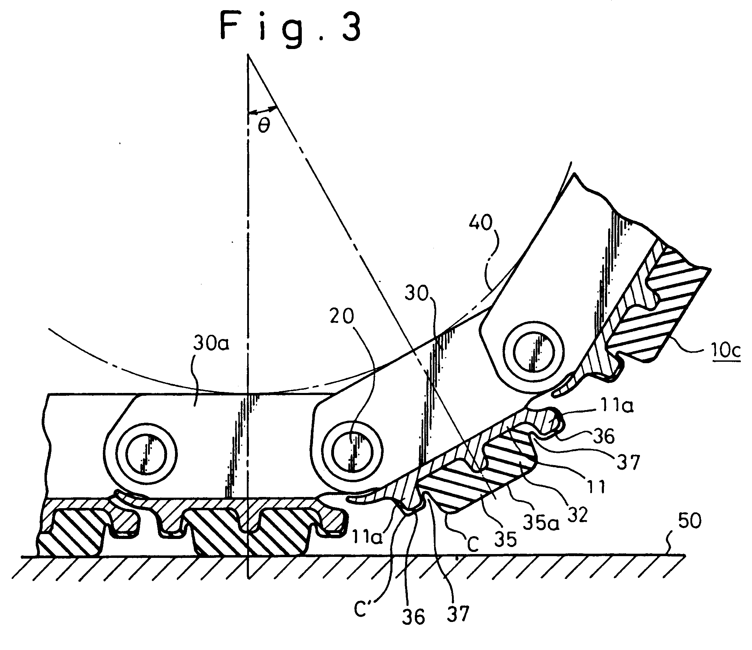

Fig. 3 shows a second embodiment of this invention. In Fig. 3, the parts or elements of the crawler shoe corresponding to those shown in Figs. 1, 2 and 4 are indicated by the same reference numerals.

The surface of the elastic shoe 32 of this crawler shoe is provided with transverse grooves 37 at positions away from the upper portions of the projections 11a of the respective ends of the metal shoe 11 in the traveling direction and toward to the central portion in the traveling direction. The depth of the grooves 37 is smaller than the height of the projections 11a. In other words, the bottom of the grooves 37 is farther from the ground contact portion 35 than the top of the projections 11a.

Thus, the elastic shoe 32 is divided by such grooves 37 into the ground contact portion 35 extending from the grooves 37 toward the central portion in the the traveling direction and the side edge portions 36 extending from the grooves 37 to cover the projections 11a. The ground contact portion 35 is provided with a flat ground contact surface 35a in the embodiment shown in Fig. 3.

The elastic shoe 32 has such a cross-section that the height of the side portions 36 of the elastic shoe 32 is lower than the height of the ground contact portion 35 and the end point C of the ground contact surface 35a of the ground contact portion 35 is nearer to the road surface 50 than the upper end of the side edge portions 36, at the time of the final link plunge angle θ .

In the above-mentioned second embodiment, although the ground contact surface 35a of the elastic shoe 32 has a flat surface, it may be formed as a convex surface. In addition, the elastic shoe 32 may be provided with transverse grooves (not shown) at the vertical projected area of the central projection 11b, in the same manner as the first and second embodiments.

Since the other portions of the crawler shoe shown in Fig. 3 are the same as those shown in Figs. 1, 2 and 4, the detailed explanations thereof will be omitted.

According to the second embodiment shown in Fig. 3, as the crawler shoe 10 constituted as mentioned above, at the time of the final link plunge angle θ , the side edge portion 36 of the elastic shoe 32 does not come into contact with the ground surface, but the ground contact portion 35 spaced therefrom by the transverse groove 37 comes into contact with the road surface 50. The ground contact portion 35 is, however, formed to be extend in the central area of the elastic shoe 32 and away from the corresponding projection 11a and, therefore, these portions are subjected to a compression stress more than a shearing stress.

Therefore, only a very small or almost no expansion strain is exerted on the plunged side of the elastic shoe 32 including the side edge portion 36 and the ground contact portion 35. Therefore, during traveling on a gravel road, even if pebbles or the like on the road snapped by the side edge portion 36 or the ground contact portion 35, the rubber therearound will not be damaged.

In the embodiment shown in Fig. 3, the rubber thickness at the side edge portion 36 and the ground contact portion 35 of the elastic shoe can be selected in a different in such a manner that the upper end of the side edge portions 36 is nearer to the road surface 50 than the end point C of the ground contact surface 35a, at the time of the final link plunge angle θ.

In this case, the side edge portion 36 of the elastic shoe 32 first comes into contact with the ground surface 50 than the ground contact portion 35. However, even if the rubber around the side edge portion 36 was damaged due to the shearing stress, the rubber of the ground contact portion 35 would be protected by the transverse groove 37 and, therefore, prevented from being damaged.

In the embodiment shown in Fig. 3, although the side edge portion 36 is covered by the relatively thin rubber of the the elastic shoe, the rubber at this portion may be removed so that the upper portion of the projections 11a be exposed.

Also, if the ground contact surface 35a of the elastic shoe 22 has a convex surface, the stress concentration on the central portion of the ground contact surface 35a will be much reduced and, therefore, a damage on the rubber around the ground contact portion 35 will be eliminated.

It should be understood by those skilled in the art that the foregoing description relates to only embodiments of the disclosed invention according to claims 1 to 6.

## Claims

1. A crawler shoe used in an endless tracked vehicle, said crawler shoe (10) having a ground contact side and comprising: a metal shoe (11) made of, such as iron or the like, and providing integrally with at least two projections (11a) projecting toward said ground contact side arranged along a traveling direction of said crawler shoe, and a elastic shoe (12) made of, such as a rubber or the like, integrally molded and sealed with said metal shoe at said ground contact side, said elastic shoe having vertical side faces (14) arranged at the respective ends in the traveling direction and a ground contact surface (15), characterized in that

    said elastic shoe is provided with at least one tapered surface (16) at a position corresponding to a vertical projected area of preceeding one of projections, assuming that said projections have projected areas in the vertical direction, and
    an intersection (A) between said ground contact surface (15) and said tapered surface (16) is nearer to a central portion of the elastic shoe than said projected area of the projection (11a).

2. A crawler shoe as set forth in claim 1, wherein a slope or inclination of said tapered surface (16) is determined with reference to a rubber thickness of said elastic shoe in such a manner that, at a position of the final link plunged angle ($\theta$), an angle ($\alpha$) defined between said tapered surface and a road surface is 0-30 degree.

3. A crawler shoe as set forth in claim 1, wherein said elastic shoe (11) is provided with two tapered surfaces (16) at positions corresponding to vertical projected areas of said respective projections (11a).

4. A crawler shoe used in an endless tracked vehicle, said crawler shoe (10) having a ground contact side and comprising: a metal shoe (11) made of, such as iron or the like, and providing integrally with at least two projections (11a) projecting toward said ground contact side arranged along a traveling direction of said crawler shoe, and a elastic shoe (32) made of, such as a rubber or the like, integrally molded and sealed with said metal shoe (11) at said ground contact side, said elastic shoe (32) having vertical side faces arranged at the respective ends in the traveling direction and a ground contact surface (35), characterized in that

    said elastic shoe (32) is provided with a transverse groove (37) at position away from an upper portion of at least preceeding one of said projections (11a) and toward to a central portion in the traveling direction, and said transverse groove (37) having a depth which is smaller than a height of said projections (11a).

5. A crawler shoe as set forth in claim 4, wherein said elastic shoe (32) has such a cross-section that an end point (C) of said ground contact surface (35) is nearer to the road surface than an upper end (C') of a side edge portion, which is spaced away from said ground contact surface by said transverse groove, at the time of the final link plunge angle $\theta$.

6. A crawler shoe as set forth in claim 4, wherein said elastic shoe is provided with two transverse grooves (37) at respective positions away from respective upper portions of said projections and toward to a central portion in the traveling direction.

## Patentansprüche

1. Raupenschuh, der an einem mit einer endlosen Raupe versehenen Fahrzeug verwendet wird, wobei der Raupenschuh (10) eine Grundkontaktseite aufweist und einen beispielsweise aus Eisen oder dergleichen hergestellten Metallschuh (11), der integral mit zumindest zwei Vorkragungen (11a) versehen ist, die zu der entlang einer Bewegungsrichtung des Raupenschuhs angeordneten Grundkontaktseite hin vorstehen, und einen beispielsweise aus Gummi oder dergleichen hergestellten elastischen Schuh (12) umfaßt, der an dem Metallschuh an der Grundkontaktseite integral angeformt ist und diesen umschließt, wobei der elastische Schuh senkrechte, an den in Bewegungsrichtung jeweiligen Enden angeordnet Seitenflächen (14) und eine Grundkontaktfläche (15) aufweist, dadurch gekennzeichnet, daß

    vorausgesetzt, daß die Vorkragungen in vertikaler Richtung projizierte Flächen haben, der elastische Schuh an einer mit einer vertikal projizierten Fläche von einer der vorhergehenden Vorkragungen übereinstimmenden Stelle mit zumindest einer abgefasten Oberfläche (16) versehen ist, und
    ein Schnittpunkt (A) zwischen der Grundkontaktfläche (15) und der abgefasten Oberfläche (16) näher an einem Mittelabschnitt des elastischen Schuhs liegt als die projizierte Fläche der Vorkragung (11a).

2. Raupenschuh nach Anspruch 1, bei dem eine Neigung oder Inklination der abgefasten Oberfläche (16) bezüglich einer Gummidicke des elastischen Schuhs in solch einer Weise festgelegt ist, daß, in der Stellung des Endgliedeintauchwinkels (θ) ein zwischen der abgefasten Oberfläche und der Straßenoberfläche definierter Winkel (α) 0 bis 30° beträgt.

3. Raupenschuh nach Anspruch 1, bei dem der elastische Schuh (11) an den vertikal projizierten Flächen der jeweiligen Vorkragungen (11a) entsprechenden Stellen mit zwei abgefasten Oberflächen (16) versehen ist.

4. Raupenschuh, der an einem mit einer endlosen Raupe versehenen Fahrzeug verwendet wird, wobei der Raupenschuh (10) eine Grundkontaktseite aufweist und einen beispielsweise aus Eisen oder dergleichen hergestellten Metallschuh (11), der integral mit zumindest zwei Vorkragungen (11a) versehen ist, die zu der entlang einer Bewegungsrichtung des Raupenschuhs angeordneten Grundkontaktseite hin vorstehen, und einen beispielsweise aus Gummi oder dergleichen hergestellten elastischen Schuh (32) umfaßt, der an dem Metallschuh (11) an der Grundkontaktseite integral angeformt ist und diesen umschließt, wobei der elastische Schuh (32) senkrechte, an den in Bewegungsrichtung jeweiligen Enden angeordnete Seitenflächen und eine Grundkontaktfläche (35) aufweist, dadurch gekennzeichnet, daß

der elastische Schuh (32) in Bewegungsrichtung an einer von einem oberen Abschnitt von zumindest einer der vorhergehenden Vorkragungen (11a) beabstandeten und hin zu einem Mittelabschnitt liegenden Stelle mit einer Quernut (37) versehen ist, und die Quernut (37) eine Tiefe hat, die kleiner ist als eine Höhe der Vorkragungen (11a).

5. Raupenschuh nach Anspruch 4, bei dem der elastische Schuh (32) einen derartigen Querschnitt besitzt, daß beim Endgliedeintauchwinkel (θ) ein Endpunkt (C) der Grundkontaktfläche (35) näher an der Straßenoberfläche liegt als ein oberes Ende (C') eines Seitenkantenabschnitts, der durch die Quernut von der Grundkontaktfläche beabstandet ist.

6. Raupenschuh nach Anspruch 4, bei dem der elastische Schuh in Bewegungsrichtung an jeweiligen von den jeweiligen oberen Anschnitten der Vorkragungen beabstandeten und hin zu einem Mittelabschnitt liegenden Stellen mit zwei Quernuten (37) versehen ist.

**Revendications**

1. Patin de chenille utilisé dans un véhicule à chenilles sans fin, ledit patin de chenille (10) ayant un côté en contact avec le sol et comprenant: un patin métallique (11) réalisé par exemple en fer ou analogue et réalisé intégralement avec au moins deux projections (11a) faisant saillie vers ledit côté en contact avec le sol agencées le long d'une direction de déplacement dudit patin de chenille, et un patin élastique (12) réalisé par exemple en caoutchouc ou analogue, moulé intégralement et assemblé par soudage audit patin métallique audit côté en contact avec le sol, ledit patin élastique ayant des faces latérales verticales (14) agencées aux extrémités respectives dans la direction de déplacement et une surface en contact avec le sol (15), caractérisé en ce que

ledit patin élastique présente au moins une surface diminuée (16) à une position correspondant à une zone verticale en saillie d'une projection précédente, en supposant que lesdites projections possèdent des zones en saillie dans la direction verticale et
une intersection (A) entre ladite surface en contact avec le sol (15) et ladite surface diminuée (16) est plus proche d'une partie centrale du patin élastique que ladite zone en saillie de la projection (11a).

2. Patin de chenille selon la revendication 1, dans lequel une pente ou inclinaison de ladite surface diminuée (16) est déterminée relativement à l'épaisseur du caoutchouc dudit patin élastique de telle manière que dans une position de l'angle de plongée de liaison finale (θ), un angle (α) défini entre ladite surface diminuée et une surface de route est de 0 - 30 degrés.

3. Patin de chenille selon la revendication 1, dans lequel ledit patin élastique (11) présente deux surfaces diminuées (16) à des positions correspondant à des zones verticales en saillie desdites projections respectives (11a).

4. Patin de chenille utilisé dans un véhicule à chenilles sans fin, ledit patin de chenille (10) ayant un côté en contact avec le sol et comprenant: un patin métallique (11) réalisé par exemple en fer ou analogue et réalisé intégralement avec au moins deux projections (11a) faisant saillie vers ledit côté en contact avec le sol agencées le long d'une direction de déplacement dudit patin de chenille, et un patin élastique (32) réalisé par exemple en caoutchouc ou analogue, moulé intégralement et assemblé par soudage avec ledit patin métallique (11) audit côté en contact avec le sol, ledit patin élastique (32) ayant des faces latérales verticales agencées aux extrémités respectives dans la direction de déplacement et une surface en contact avec le sol (35), caractérisé en ce que

ledit patin élastique (32) présente une rainure transversale (37) à une position éloignée d'une partie supérieure d'au moins une des projections précédentes (11a) et vers une partie centrale dans la direction de déplacement, et ladite rainure transversale (37) ayant une profondeur qui est plus petite qu'une hauteur desdites projections (11a).

5. Patin de chenille selon la revendication 4, dans lequel ledit patin élastique (32) est réalisé en section transversale de telle sorte qu'un point d'extrémité (C) de ladite surface en contact avec le sol (35) soit plus proche de la surface de route qu'une extrémité supérieure (C') d'une partie latérale de bord qui est éloignée de ladite surface en contact avec le sol par ladite rainure transversale, à l'instant de l'angle de plongée de liaison finale θ.

6. Patin de chenille selon la revendication 4, dans lequel ledit patin élastique présente deux rainures transversales (37) à des positions respectives éloignées des parties supérieures respectives desdites protections et vers une partie centrale dans la direction de déplacement.

Fig. 1

# Fig. 2

EP 0 516 128 B2

# Fig. 3

EP 0 516 128 B2

Fig. 4 (PRIOR ART)